# EUROPEAN PATENT SPECIFICATION

(11) **EP 1 467 878 B1**
(45) Date of publication and mention of the grant of the patent: **30.08.2006**
(21) Application number: 02786255.6
(22) Date of filing: 13.12.2002
(51) Int. Cl.: B60D 1/14, B60R 19/48

(54) **TOW HOOK SYSTEM**
ZUGHAKENSYSTEM
SYSTEME DE CROCHET DE REMORQUAGE

(30) Priority: 14.12.2001 NO 20016137
(43) Date of publication of application: 20.10.2004
(73) Proprietor: ADAM OPEL AG, 65423 Rüsselsheim (DE)
(72) Inventor: HOILAND, Thorbjorn, N-2830 Raufoss (NO); HOCK, Theobald, 63762 Grossostheim (DE)
(74) Representative: Daniel, Ulrich W.P.
(86) International application number: PCT/NO2002/000479
(87) International publication number: WO 2003/051654

(56) References cited:
- EP-A1- 0 949 092
- DE-A1- 4 409 209
- DE-A1- 10 059 497
- DE-A1- 10 110 332
- DE-C1- 19 902 478

## Description

The invention relates to a tow hook accommodation arrangement or adapter provided with flanges for use in a vehicle body according to the precharacterising portion of claim 1.

On every vehicle, there has to be a possibility to attach a rope or the like for towing of the vehicle and to enable it to tow other vehicles. Therefore, there has to be a hook, ring or the like in the front and back of the vehicle in order to secure a towing rope or any other means for towing vehicles.

On many vehicles a hook or ring has been attached to the front and back of the main frame of the vehicle under the bumper beam. When the hooks are placed under the bumper beam, they will not protrude from the vehicle body and will therefore not cause any extra danger in an accident or the like.

Because the bumper beams and surroundings on new vehicles normally are covered by a plastic cover, it has become difficult to attach the tow hook on the vehicle main frame on a place easily reachable for the user of the vehicle. Instead, a device enabling the tow hook to be attached to it, is mounted in the bumper beam. The tow hook is then attached in this device or adapter when needed.

The adapter can be placed perpendicular to the bumper beam impact walls. During an impact on the bumper beam body, the adapter may act as a trussing member inside the bumper, obstructing some of the deformation of the bumper beam, thereby reducing its energy absorbing capacity.

DE 199 02 478 C1 discloses a tow hook accommodation arrangement or adapter, for being disposed inside an energy absorbing member, provided with a portion for fastening a tow hook, wherein the adapter has a rear part for extending through a hole in the rear wall of the energy absorbing member, providing transversal support and allowing a free transfer or movement of the adapter through the rear wall of the energy absorbing member upon collision impact. The adapter is formed as a tube having a circular cross-section. A front plate is connected (obviously welded) to the tube to form the flanges for fixing the tube to the energy absorbing member. Tensile forces during towing act on the connection between the tube and the plate, whereby the connection is likely to break if the weld seam has not been made carefully.

The object of the invention is to provide a reliable and easy to form connection between the adapter and the energy absorbing member.

To meet this object, the adapter is made as described in claim 1.

The invention will be further described with reference to the attached drawings, Figs. 1-5, where Fig.1 shows schematically in a perspective view a section of a bumper beam with an adapter and a tow hook.

Fig. 2 shows a section of a bumper beam with an adapter after an impact, tow hook removed.

Fig. 3A shows in a side view one embodiment of an adapter.

Fig. 3B shows in a side view a second embodiment of an adapter.

Fig. 3C shows a side view a third embodiment of an adapter.

Fig. 3D shows a side view a fourth embodiment of an adapter.

Fig. 4A shows a cross section of the second embodiment of the adapter arranged in a section of a bumper beam.

Fig. 4B shows a cross section of the second embodiment of the adapter arranged in a section of a bumper beam after an impact.

Fig. 5A shows a cross section of the fourth embodiment of the adapter arranged in a section of a bumper beam.

Fig. 5B shows a cross section of the fourth embodiment of the adapter arranged in a section of a bumper beam after an impact.

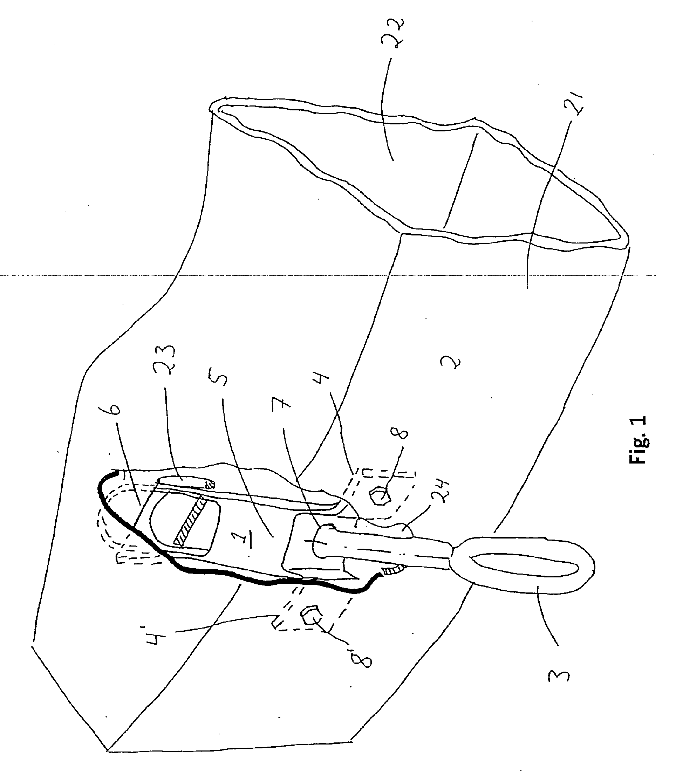

Fig.1 shows how the adapter 1 is deposited inside the front wall 21 of a bumper beam 2.

In the example the adapter is attached to the front wall 21 by means of nuts or screws 8, 8'. The adapter 1 may be fixed to the front wall 21 by other means, e. g. gluing, welding or any other means found suitable.

The adapter 1 is installed in the bumper beam 2 by inserting the adapter 1 through a hole 23 in the rear wall 22 of the bumper beam 2. The two flanges 4, 4' are thereby brought into abutment with the front wall of the bumper beam. In the example holes are made in the two flanges 4, 4' on the adapter 1, enabling screws 8, 8' to fix the adapter 1 to the front wall 21 of the bumper beam 2.

In the front wall 21, there is a passage 24 leading the tow hook 3 through the front wall 21 into the adapter 1. When the adapter is not in use, the passage 24 in the front wall 21 of the bumper beam 2 may be closed by a lid, preventing water, dust and other impurities from getting into the construction.

In the central part 5 of the adapter 1 there is a portion 7 (not fully shown) with inner threads fitted to outer threads on a section of the tow hook 3. In Fig. 1 a tow hook 3 is mounted in the adapter 1 in the portion 7 of the central part 5. It should be understood that the tow hook 3 can be attached to the adapter 1 by any other appropriate means. Thus the portion 7 may co-operate with the tow hook by any means known by those skilled in the art.

When the tow hook 3 is in use, the flanges 4, 4' will take up the tensile forces in the longitudinal direction of the tow hook 3 and the adapter 1. The rear part of the adapter 1 is passing through a hole 23 in the rear wall 22. If the adapter 1 is pushed sideways with respect to the longitudinal direction of the tow hook 3, the side walls of the hole 23 will take up forces acting sideways, thereby holding the system stable by providing transversal support to the adapter.

When the tow hook 3 is not in use, it can be removed from the adapter 1. The adapter 1 is then hidden in the bumper beam 2, and no parts of it will pass through the front wall 21 of the bumper beam 2. The rear part of the adapter is advantageously formed as an open chamber 6 in order to reduce weight of the adapter 1. As the chamber 6 is passing through the hole 23, the sides of the hole 23 work as a stabiliser for the adapter and the tow hook during normal use. If larger impacts are forced on the construction leading to great deformations of the bumper beam 2 and the surrounding structures, the chamber 6 enables the adapter, that may restrict deformation in an unwanted manner, to partly collapse in order to avoid becoming a trussing part in the structure.

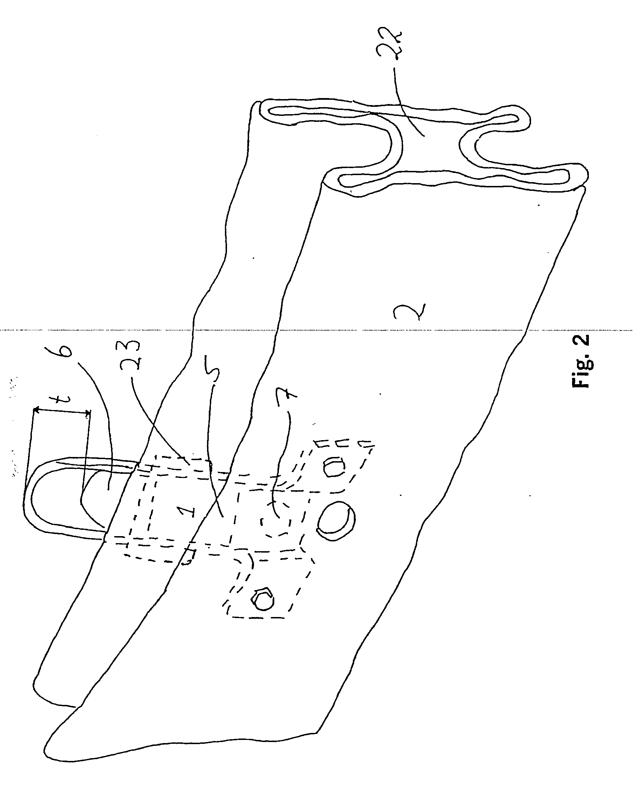

Fig. 2 shows what ideally will happen during impact. When the bumper beam 2 collapses, the adapter 1 passes through the hole 23 in the rear wall 22 of the bumper beam 2. In this way, the adapter 1 will not in a noticeable way take up forces, and will normally not act as a trussing member in the structure. The adapter 1 will therefore mainly not interfere with the deformation of the bumper beam 2.

It is advantageous to produce the adapter as an extruded profile with a cross section comprising the parts forming the flanges 4, 4', the central part 5 and the chamber 6. The profile is cut in the wanted thickness t as indicated in Fig. 2, hereafter a portion 7 with threads is drilled and sheared in the central part 5. The adapter 1 will then have a shape similar to the shape shown in Figs. 1 and 2. Any other way of production found suitable may be used within the scope of the invention, e.g. casting of composites, steel members etc.

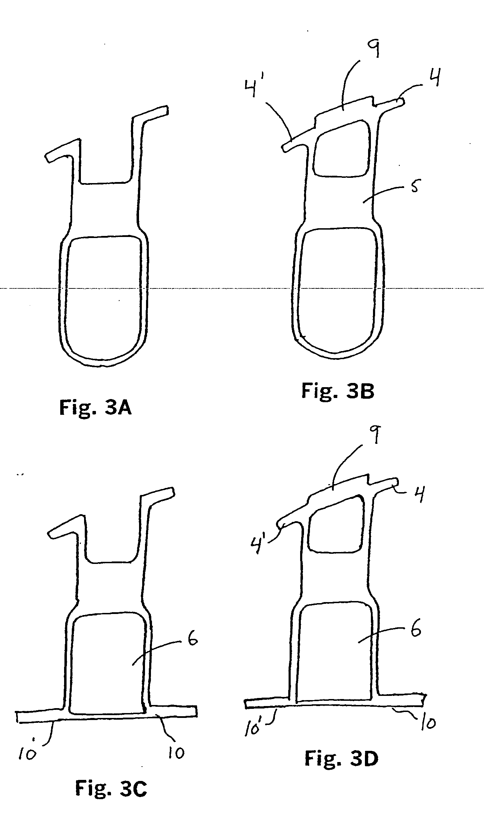

If desired, the profile of the adapter 1 may be varied without losing the safety characteristics of the adapter. Figs. 3 A, B, C and D show different embodiments of the adapter 1, all representing the advantages of the invention. Fig. 3A shows the same embodiment of the adapter 1 as in Figs. 1 and 2. Fig. 3B shows the adapter 1 with a web 9 between the flanges 4 and 4'. It is necessary to drill a hole through the web 9 corresponding with the portion 7 of the central part 5 of the adapter 1 in order to lead the tow hook 3 into the central part 5 of the adapter 1.

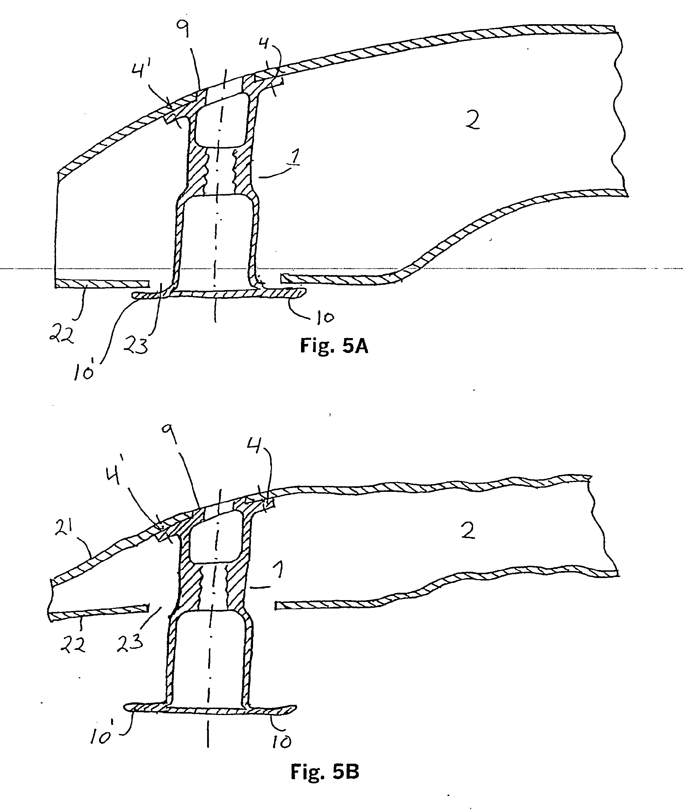

Figs. 3C and D show embodiments of the adapter 1 with two support flanges 10 and 10' formed on the chamber 6 of the adapter 1. When the adapter 1 is led through the hole 23 in the rear wall 22 of the bumper beam 2, the support flanges 10, 10' will be brought into abutment with the rear wall 22 (shown in Fig. 5A). When the tow hook 3 is in use, the support flanges 10, 10' give the adapter 1 extra supporting means, transferring some of the traction forces from the tow hook 3 through the adapter 1 to the rear wall 22 of the bumper beam. Fig. 3C shows an adapter 1 with support flanges 10, 10', while Fig. 3D shows an adapter with a web 9 and support flanges 10, 10'.

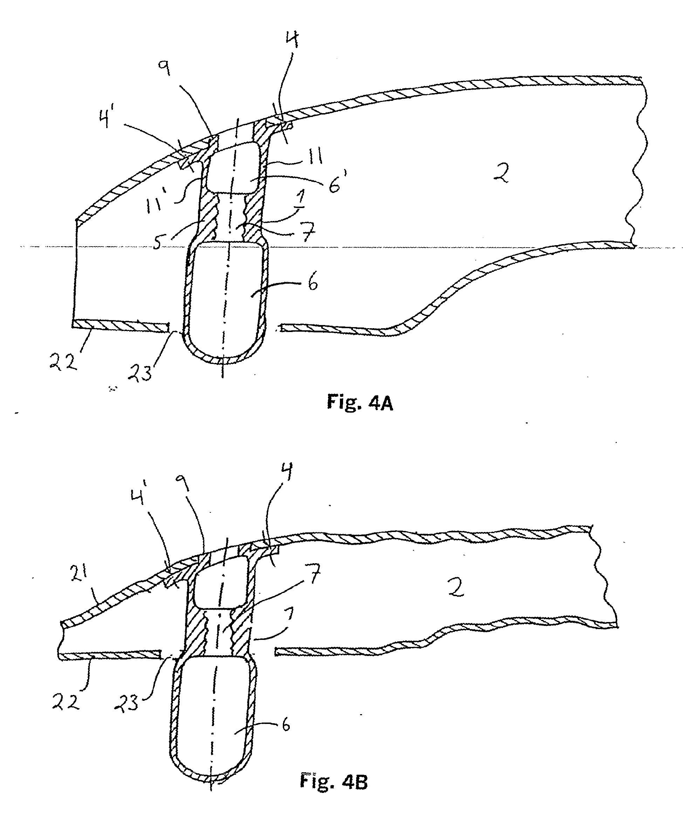

Fig 4A shows the adapter 1 with a web 9 similar to that of Fig. 3B mounted in a section of a bumper beam 2. The hole 23 in the rear wall 22 is big enough for the adapter 1 with flanges 4, 4' to be inserted in the bumper beam 2 through the hole 23 during assembly. Between the flanges 4, 4' and the central part 5 there are arranged sidewalls 11,11' thus forming a chamber 6'.

Fig. 4B shows the same adapter 1 after the bumper beam 2 has been deformed. When the front wall 21 is forced towards the rear wall 22, the adapter 1 is led backwards through the hole 23 in the rear wall 22 of the bumper 2. In situations with heavy impact loads and an extensive deformation of the structure surrounding the adapter 1, the chamber 6 and the side walls 11, 11' of the adapter 1 (see Fig. 4A) have a possibility of collapsing, thereby avoiding the possibility of becoming an obstacle in the deformation process.

Fig 5A shows an adapter 1 with a web 9 and support flanges 10, 10' similar to that of Fig. 3D. The support flanges 10, 10' will be brought into abutment with the back wall 22. As shown in Fig. 5B the presence of the support flanges 10, 10' will not affect the deformation behaviour of the adapter 1.

As the end section of the adapter is partly passing through the hole in the rear wall, the adapter is providing transversal support without becoming a trussing member in the energy absorbing structure of a vehicle. The adapter provides a stable and effective method of attaching a tow hook to the vehicle.

## Claims

1. Tow hook accommodation arrangement or adapter (1), for being disposed inside an energy absorbing member (2), provided with flanges (4, 4') and further provided with a portion (7) for fastening a tow hook (3), wherein the adapter (1) has a rear part for extending through a hole (23) in a rear wall (22) of the energy absorbing member (2), providing transversal support and allowing a free transfer or movement of the adapter (1) through the rear wall of the energy absorbing member (2) upon collision impact, **characterised in that** the adapter (1) is made of a cut-off piece of an extruded profile with a cross-section which comprises a part forming the flanges (4, 4'), a central part (5) for attaching the tow hook and a chamber (6).

2. Tow hook accommodation arrangement according to claim 1, **characterised in that** the rear part of the adapter (1) is partly formed into support flanges (10,10').

3. Tow hook accommodation arrangement according to claim 1, **characterised in that** a web (9) is arranged between the flanges (4, 4').

4. Tow hook accommodation arrangement according to claim 1, **characterised in that** the rear part of the adapter (1) is formed as a chamber (6).

5. Tow hook accommodation arrangement according to claim 1, **characterised in that** sidewalls (11, 11') are arranged between the central part (5) and the flanges (4, 4') thus forming a second chamber (6').

6. Tow hook accommodation arrangement according to claim 1, **characterised in that** the profile is made of an aluminum alloy.

## Patentansprüche

1. Unterbringung der Anhängekupplungsvorrichtung oder des Adapters (1), ausgestattet mit Flanschen (4, 4') und zudem mit einem Teil (7) zum Befestigen eines Anhängehakens (3), wobei der Adapter (1) in einem energieabsorbierenden Element (2) untergebracht ist, insbesondere wenn es sich um einen Fahrzeugkörper handelt; das Charakteristische daran ist, dass der Adapter (1) in das energieabsorbierende Element (2) durch ein Loch (23) in der rückwärtigen Wand (22) eingebaut ist und so einen Querträger schafft und eine freie Übertragung oder Bewegung des Adapters (1) durch die rückwärtige Wand des Bauteils bei einem Kollisionsaufprall ermöglicht.

2. Unterbringung der Anhängekupplungsvorrichtung gemäß Patentanspruch 1; das Charakteristische daran ist, dass der rückwärtige Teil des Adapters (1) teilweise aus den Trägerflanschen geformt ist.

3. Unterbringung der Anhängekupplungsvorrichtung gemäß Patentanspruch 1; das Charakteristische daran ist, dass es zwischen den Flanschen (4, 4') einen Steg (9) gibt.

4. Unterbringung der Anhängekupplungsvorrichtung gemäß Patentanspruch 1; das Charakteristische daran ist, dass das rückwärtige Teil des Adapters (1) wie eine Kammer (6) geformt ist.

5. Unterbringung der Anhängekupplungsvorrichtung gemäß Patentanspruch 1; das Charakteristische daran ist, dass die Seitenwände (11, 11') zwischen dem zentralen Teil (5) und den Flanschen (4, 4') liegen und so eine zweite Kammer (6') bilden.

6. Unterbringung der Anhängekupplungsvorrichtung gemäß Patentanspruch 1; das Charakteristische daran ist, dass das Profil aus einer Aluminiumlegierung hergestellt ist.

## Revendications

1. Agencement de logement de crochet de remorquage ou adaptateur (1), destiné à être agencé à l'intérieur d'un organe absorbeur d'énergie (2), muni de rebords (4, 4') et muni en outre d'une section (7) pour fixer un crochet de remorquage (3), dans lequel l'adaptateur (1) a une partie arrière destinée à s'étendre à travers un trou (23) ménagé dans une paroi arrière (22) de l'organe absorbeur d'énergie (2), fournissant un support transversal et permettant un transfert libre ou mouvement de l'adaptateur (1) à travers la paroi arrière de l'organe absorbeur d'énergie (2) lors d'un impact de collision, **caractérisé en ce que** l'adaptateur (1) est formé d'une pièce découpée d'un profilé réalisé par extrusion avec une section transversale qui comprend une partie formant les rebords (4, 4'), une partie centrale (5) destinée à attacher le crochet de remorquage et une alvéole (6).

2. Système de logement de crochet de remorquage selon la revendication 1, **caractérisé en ce que** la partie arrière de l'adaptateur (1) est en partie réalisée afin de constituer des rebords de support (10, 10').

3. Système de logement de crochet de remorquage selon la revendication 1, **caractérisé en ce qu'**une bande (9) est agencée entre les rebords (4, 4').

4. Système de logement de crochet de remorquage selon la revendication 1, **caractérisé en ce que** la partie arrière de l'adaptateur (1) est réalisée sous forme d'une alvéole (6).

5. Système de logement de crochet de remorquage selon la revendication 1 **caractérisé en ce que** des parois latérales (11, 11') sont agencées entre la partie centrale (5) et les rebords (4, 4'), réalisant ainsi une seconde alvéole (6').

6. Système de logement de crochet de remorquage selon la revendication 1, **caractérisé en ce que** le profil est fait d'un alliage d'aluminium.
